(19) **Europäisches Patentamt European Patent Office Office européen des brevets**

(11) **EP 1 612 416 B1**

(12) **EUROPEAN PATENT SPECIFICATION**

(45) Date of publication and mention
of the grant of the patent:
**06.08.2008 Bulletin 2008/32**

(51) Int Cl.:
*F03G 7/06* *(2006.01)* *F02K 1/38* *(2006.01)*

(21) Application number: **05254110.9**

(22) Date of filing: **30.06.2005**

(54) **Shape memory material actuator**

Formgedächtnisbetätigungseinrichtung

Actuateur en alliage à mémoire de forme

(84) Designated Contracting States:
**DE FR GB**

(30) Priority: **02.07.2004 GB 0414869**

(43) Date of publication of application:
**04.01.2006 Bulletin 2006/01**

(73) Proprietor: **ROLLS-ROYCE PLC**
**London, SW1E 6AT (GB)**

(72) Inventor: **Webster, John Richard**
**Derby DE23 6AF (GB)**

(74) Representative: **Gunn, Michael Alan**
**Rolls-Royce plc**
**P.O. Box 31**
**Derby DE24 8BJ (GB)**

(56) References cited:
**EP-A- 1 367 249** **US-A- 5 033 713**
**US-A1- 2002 125 340**

- **PATENT ABSTRACTS OF JAPAN vol. 008, no. 244 (M-337), 9 November 1984 (1984-11-09) & JP 59 120791 A (KEIHIN SEIKI SEISAKUSHO:KK), 12 July 1984 (1984-07-12)**
- **PATENT ABSTRACTS OF JAPAN vol. 008, no. 230 (M-333), 23 October 1984 (1984-10-23) & JP 59 110874 A (KEIHIN SEIKI SEISAKUSHO:KK), 26 June 1984 (1984-06-26)**

## Description

The present invention relates to the actuation of shape memory (SM) elements, preferably metallic alloys, by inductive heating, to induce a state change and hence shape change.

The uses of SM elements are well known, for example a shape memory alloy element may be integrated into serrations or tabs disposed to a downstream edge of a gas turbine exhaust nozzle, as disclosed in GB2374121. During take-off of an aircraft with such an exhaust nozzle arrangement, the serrations are immersed into an exhaust gas stream to reduce jet noise by creating vortices that mix the shear layer formed between adjacent gas streams. However, at aircraft cruise, where no noise reduction is necessary, immersion causes unwanted drag and therefore it is desirable for the serrations to be aerodynamically aligned. The change in position of the serrations is effected by an SM element associated with the serration. The SM element is actuated by a change in temperature and thus a change in the SM element's modulus. Such a change in temperature may be caused by the temperature change of the gas streams immediately adjacent the SM element, by a dedicated temperature controlled gas supply or by passing an electrical current through the SM element for resistance heating.

However, temperatures of the gas streams adjacent the SM elements are not necessarily favourable to affect such modulus change in the SM element, particularly considering different aircraft missions around the World. Where actuation of the SM element is by a dedicated temperature controlled gas supply, specific apparatus is required to control temperature and gas flow as well as inclusion of gas flow conduits. Such apparatus is relatively heavy, costly and complex and it is also necessary to insulate the SM element. Although arrangements for resistance heating are possible, the SM element must be electrically insulated from the remainder of an associated structure. Electrical heating of SMAs is commonly achieved by passing a current through a section of the material having a relatively low cross sectional area. This regularly consists of an SMA wire stretched between two parts of the structure which must be moved by changing the tensile load within the wire. In order to achieve this, the two ends of the wire must be electrically isolated from each other. The low cross sectional area of a wire is generally required in order to achieve sufficient electrical current density in the low resistance materials. An alternative is to generate a very large current in a larger cross sectional area, which clearly has its disadvantages. One method of achieving this is to use an electrical transformer as disclosed in EP1031444. In this particular case, the secondary windings of the transformer are an integral part of the structure that includes the SMA element. In other cases, the secondary winding can effectively be reduced to just one turn, to achieve the maximum electrical current from a given input. This still provides a discrete path which the electrical current must follow and is defined by the structure. Heating of the component is by electrical resistance (or Joule) heating as it passes around this predefined circuit. In all cases, the induction is an incidental means of achieving a current flow around a predetermined electrical circuit.

In these prior art arrangements, as the parent structure is usually metallic or at least electrically conductive, electrical insulation is problematic as structural connection between SM element and parent is required. Thus current flowing through the SM element will also disadvantageously flow through the parent structure, which may also be in preference to the SM element. Furthermore, in accordance with the present invention, the SMA element may be in sheet form, rather than wire form, and of low resistance, which would require substantial electrical current to suitably heat the SM element to activate it.

JP 59 120791 discloses an electric coil adjacent a heating unit and a shape memory spring on the opposite side of the heating unit to the coil. When supplied with electricity the coil generates a magnetic field causing the unit to heat and which is sufficient to change the temperature of the SM spring and thus its modulus. The SM spring acts as an actuator.

Therefore it is an object of the present invention to provide a shape memory material inductive heating arrangement that overcomes the problems of the prior art inductive heating arrangements.

In accordance with a first aspect of the present invention there is provided a shape memory material inductive heating arrangement comprising an array of coils capable of carrying an alternating electrical current and generating a magnetic field, a shape memory element having a first state having a first stress-strain characteristic and a second state having a second stress-strain characteristic, the array of coils and shape memory element are in effective range characterised in that the array of coils are arranged so that when an alternating current is passed through the coils eddy currents are generated in the shape memory element and heated thereby, the induced heat sufficient to change the modulus of the shape memory element between the first and the second state.

Preferably, the SM material and structure can move repeatedly between the two states.

Preferably, the second state allows less strain in the material.

Preferably, the shape memory element is integrated into a structure and change of the state of the shape memory material between the first to the second state effects a shape change in the structure.

Alternatively, at least one further shape memory element is integrated into the structure and change of the state of the at least one shape memory material from the first to the second state effects at least one further shape change in the structure. Preferably, the at least one further shape memory element is in the form of a layer of SM material at least partly laid over a first SM layer.

Preferably, the depth of penetration through the SM layer by the magnetic field generated is selected by varying the any one of the group comprising alternating frequency, power, voltage or current in the coils, thereby controlling the degree of shape change.

Alternatively, more than one array of coils is provided and is arranged to inductively heat a discrete portion of the SM material to control the deformed shape.

Alternatively, the heating effect is controlled to be within the transition band of the SMA material, thus providing a continuously variable movement or change of condition between the two extreme states.

Alternatively, the thickness of the SM varies to control the deformed shape.

Preferably, the coils are arranged in any one of a group of general shapes comprising circular, square or triangular.

Alternatively, the shape memory element is in the form of a loop and the magnetic field and electrical coils are arranged to cause an electrical current to flow around the loop in order to cause direct electrical resistance heating.

Preferably, the loop is elongate and an array of hoops is provided, furthermore a plurality of arrays of elongate loops may be provided.

Alternatively, the SM element consists of multiple interconnected loops that electrically form a multi-turn coil.

Alternatively, the individual turns of the electrical conducting loops act together mechanically to provide a higher resultant change in force.

Preferably, one or more loops may be in the form of a circle, square or other convenient form. Alternatively, the loop may be in the form of an ellipse, rectangle or other convenient non-symmetrical form capable of anisotropic changes in any one of the group of properties comprising movement or force in different directions.

Alternatively, at least one part of the loop comprises a second material having a different or no SM properties in order to produce an anisotropic change in properties.

Preferably, a plurality of arrays of elongate loops are provided each array or loop is disposed in a different direction with respect to the structure so that the structure is capable of complex shape change.

Alternatively, the loop consists of an electrical conductor which does not have SMA properties, but is in intimate thermal contact with an SMA element, such that the SMA is heated indirectly by the applied magnetic field.

Preferably, an exhaust nozzle assembly for a gas turbine engine comprises deployable noise reducing tabs having the shape memory material inductive heating arrangement as claimed in any one of the above paragraphs.

Preferably, the deployable tabs comprise flexural element and an SM element spaced apart and joined together by webs, at least one array of inductive heating coils is disposed within the tab in effective range of the SM element.

Preferably, the tabs are capable of deployment between an aerodynamically aligned position and a deployed position where the tabs are immersed in an exhaust gas stream to provide attenuation of exhaust noise, deployment of the tabs is effected by supplying the alternating current to the array of coils.

Preferably, in another exhaust nozzle assembly for a gas turbine engine, the nozzle is formed to allow variation in its cross-sectional area dependent upon operational status, wherein the nozzle is deformable from a first state to a second state of differing cross-sectional area, the nozzle being associated with deformation means to progressively shift deformation of the nozzle to alter presented nozzle cross-sectional area, wherein the first state comprises a round circumference and the second state approximates a polygon, pursed flute, or sinusoidal variation in radius around the circumference characterised in that the nozzle comprises a shape memory material inductive heating arrangement as claimed in any one of the above paragraphs.

Advantageously, the induced heat is sufficient to change the modulus of the shape memory material between the first and the second modulus and thereby alter the natural frequency of the structure.

Preferably, the shape memory material inductive heating arrangement as claimed in any one of the above paragraphs comprises any one of a group comprising Titanium, Manganese, Iron, Aluminium, Silicon, Nickel, Copper, Zinc, Silver, Cadmium, Indium, Tin, Lead, Thallium, Platinum, Hafnium, Palladium, ceramic or polymer.

An insulation material may be applied to the SM material, and preferably the insulation material is capable of thermal insulation.

The present invention will be more fully described by way of example with reference to the accompanying drawings in which:

Figure 1 is a schematic cross-section of an embodiment of the present invention where heating of an SM element is by inductance,
Figure 2 is a view on Arrow A in Figure 1,
Figure 3 represents magnetic field strength through the thickness of the SM element of Figures 1 and 2,
Figure 4 represents temperature through the thickness of the SM element of Figure 3 induced by the magnetic field,
Figure 5 is an exploded illustration of the embodiment of figure 1;
Figure 6 is a schematic illustration of an alternative embodiment of the present invention,
Figure 7 is a schematic illustration of the invention wherein a shape memory element is incorporated in a structure,

Figure 8 is a further form of the invention where the shape memory element is in the form of loops of wires embedded in a parent structure,

Figures 8a and 8b are views on Arrow C in Figure 8 and show variations of its embodiment of the invention,

Figure 9 is a part cutaway schematic view of a bypass exhaust nozzle of a gas turbine engine comprising deployable noise reducing serrations,

Figure 9A is an enlarged view on B in Figure 9,

Figure 10 is a schematic illustration of a serration comprising an SM element and an inductive heating arrangement in accordance with the present invention.

Fig 11 shows the change in vibration characteristics with change in SMA properties.

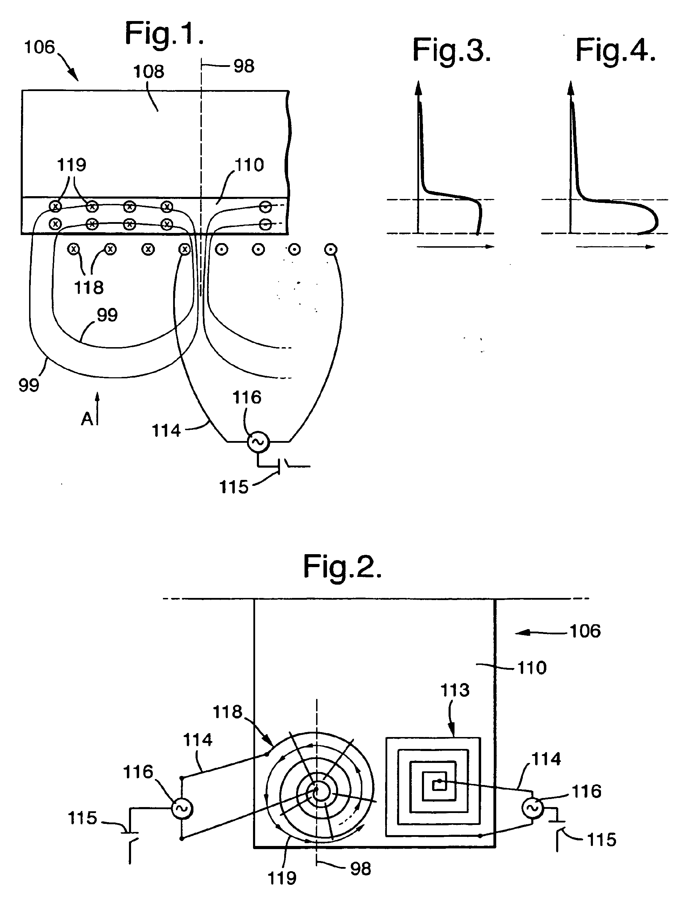

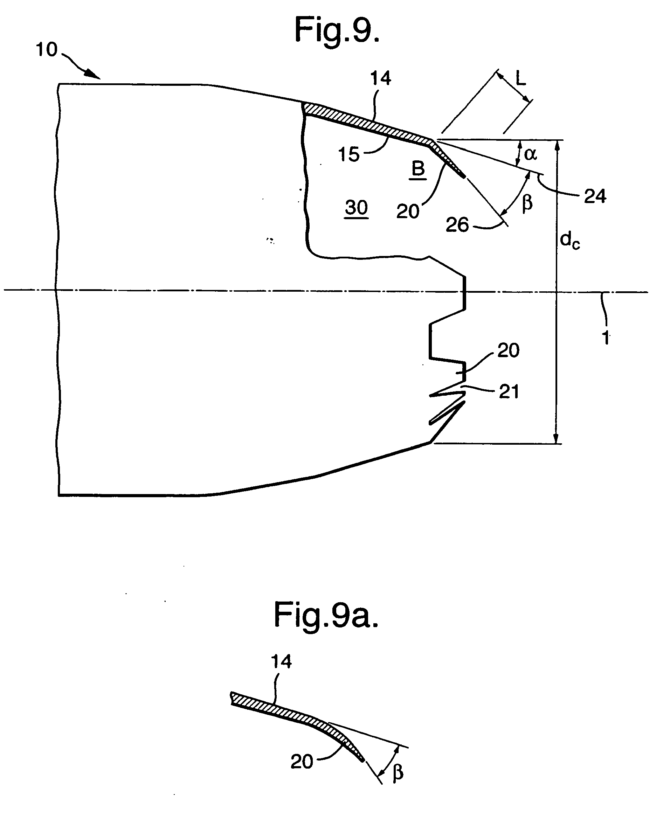

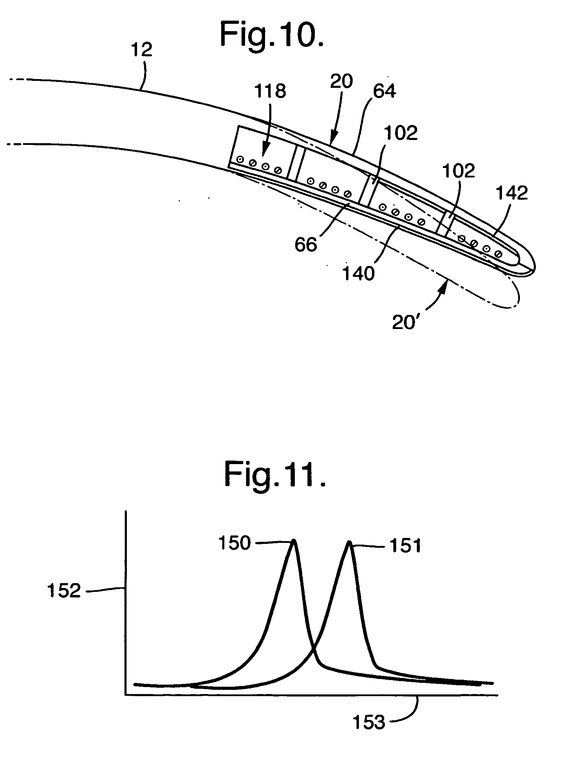

The present invention relates to the actuation of shape memory SM elements, by inductive heating, to induce a modulus change and hence shape change of the element. A general disclosure of the present invention is made with reference to Figures 1-7, however a preferred and specific example of the present invention is described with reference to Figures 9 and 10.

The change of state or other required change such as vibration resonance re-tuning of the element that is achieved within a shape memory alloy is complex. Although often expressed as simply a change in modulus of elasticity, the actual effect is to provide a change in modulus and to allow non-linear strain which can be approximated to a plastic deformation. This apparent plastic deformation can be recovered by a temperature change. With current SMA alloys, this recoverable strain occurs in the cold state and is recovered when heating to the hot state. The effect allows larger strains to be achieved between the two states. It is also possible to heat the material to a state which is within a transition band between the two extreme states. This can be used to give intermediate properties, but requires more complex control. The term modulus will be used to describe this effect throughout the remainder of this document.

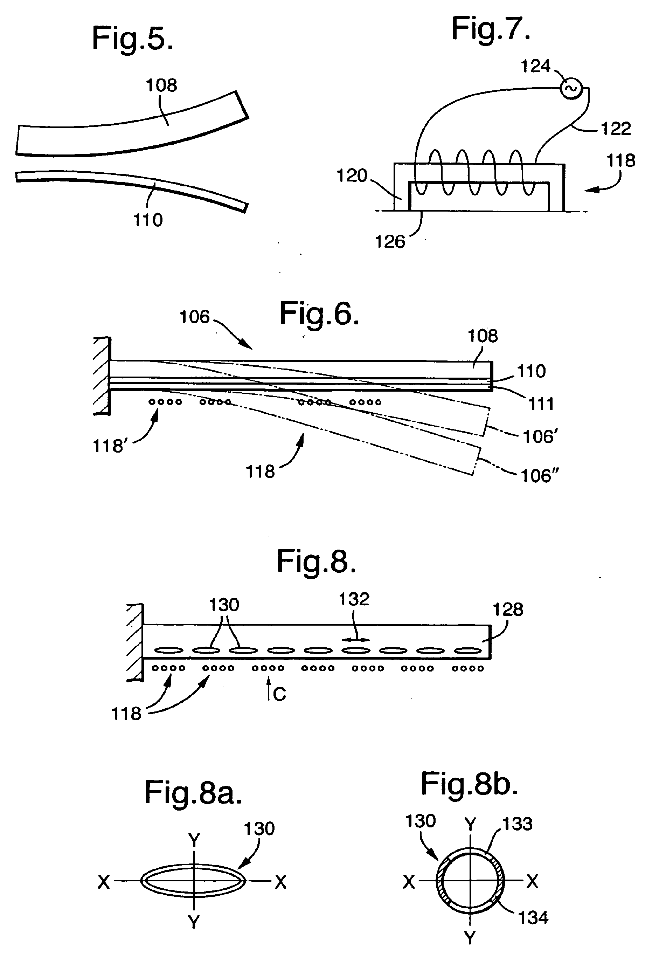

In Figures 1 and 5, an arrangement of a flexural member or structure is designated at 106 and comprises a parent member 108 laminated with a strip or sheet of shape memory material (SM) element 110. Preferably the SM element is a metallic alloy. The parent member 108 may be pre-stressed metallic structure to produce bending under a selected condition such as when the SM element 110 is not activated or vice versa. In Figure 5 the natural shape of the parent member 108 is arcuate, but when joined to an oppositely arcuate SM element 110 a substantially flat structure 106 is formed. In this case the SM element 110 has a relatively low modulus, but when inductively heated the SM material has a substantially higher modulus, bending the complete structure 106 towards its original arcuate shape.

To activate the SM element 110, a flat electrical coil 118 is disposed at an effective distance from the SM element 110. Alternating electric current is supplied to the coil 118 by conductors as at 114 which are connected to a source of electrical power such as a generator 116 which, itself, may be switch activated as at 115. In use, when one desires to effect movement of the member 108 for its intended function, current is supplied to the coil 118 to induce heating of the SM element 110 to change its modulus of elasticity and thereby move, through bending, the member 108. With this arrangement, no direct electrical connection to the alloy is required thereby simplifying installation and activation of the shape memory material SM element 110. Several coils 118 may be employed and the excitation frequency can be selected to deliver the most efficient heating effect for the SM element 110.

The present invention is realised by creating eddy currents within and to locally heat the SM material. This is in contrast to the known state of the art, which relies on inducing a current completely through the gross geometric shape of the component around a specific electrical circuit. By careful choice of alternating electrical current frequency, the heating effect is localised to penetrate into a certain depth of the material (see Figures 3 and 4). In this way, substantially only the SMA element near to the surface is heated, whilst only a limited amount of heat is generated in the parent material. The SMA elements will generally be thinner than any other surrounding structure, so heating of the SMA and reduction of heat lost to other components can be optimised.

Once the thickness of the SM element has been designed, based on required structural behaviour and required actuation, the excitation frequency and coil 118 parameters may be selected so that the magnetic field penetrates substantially only the SM element layer 110. Thus the member 108 is not significantly inductively heated. The heating effect is achieved by creating eddy currents 119 (Figures 1 and 2) which circulate substantially within the thickness of the SMA element, or an additional element in intimate contact with it. Because of the configuration of the coils 118, the eddy currents 119 substantially circulate, in the shape of the coil 118 and they do not form an overall electrical circuit, as with the prior art configurations, which define a closed loop mechanical circuit through the body of the material, i.e. substantially from one side to another of the SM element.

The size and extent of these eddy currents are determined substantially by the SM material, its geometry and the applied alternating frequency of the magnetic field.

The magnetic field strength and heating effect are shown in Figures 3 and 4. In Figure 3 an alternating frequency is selected to complement the material and thickness of the SM element 110 so that the magnetic field is substantially limited to its thickness. Thus in Figure 4, the depth of heating is substantially restricted to the SM element. It should be appreciated that by changing the alternating frequency the depth of the heating effect can be increased by a reduction in the frequency of the applied electrical current and hence magnetic field. In this way the depth of SM element heated is controllable and hence the degree of flexure of the structure is also controllable.

The parameters to consider in any such design of coil 118 and SM element 110 include the cross-section dimensions of the coil 118, the distance between coil 118 and SM element layer 110 and the distance between coils 112 in the plane of the coils. From the equation

$$Frequency = \frac{1}{\pi\mu\sigma\delta^2}$$

where $\mu$ is permeability of the SM material, $\sigma$ is the conductivity of the SM material, $\delta$ is the skin depth of the SM element layer 110, it is possible to calculate the required frequency for the SM material and its geometry. By way of an example, where the SM element is 1.0 mm thick (calculated to achieve desired bending of the structure 106) and of a typical NiTi alloy, the required alternating electrical frequency is 250 Hz. Thus when the structure is required to deform, the inductive heating element is operated and the temperature of SM element rises until it passes its switch or modulus change temperature and its modulus increases. The natural shape of the SM element independently is set such that when attached to the parent member 108 and suitably pre-stressed, the combined shape is a second desired shape. Therefore, as the modulus of elasticity of the SM element 110 increases the stiffening will tend to bend the entire structure 106 towards the SM element's natural shape.

Furthermore, by changing the alternating current the heating effect is controlled to be within the transition temperature/modulus band of the SMA material, thus providing a continuously variable movement or change of condition between the two extreme states.

Referring now to Figure 6, the arrangement of Figure 1 may be further enhanced by the addition of at least one SM layer 111 enabling at least two deformed positions 106' and 106'' to be assumed. By increasing (or decreasing) at least one of the alternating frequency, the power, the voltage, the current in the coils 118 the depth of penetration of the magnetic field generated is increased (or decreased) and hence the depth of heating of the SM layers 110, 111. Alternatively the number of coils may be increased, hence heating more of the SM element, by activating auxiliary coils. Thus a degree of control of shape change is possible when one or more of the SM layers are subject to inductive heating. The inductive heating effect of the present invention being local to the coils 118.

Furthermore, the arrangement in Figure 2 may comprise more than one array of coils 118, 118', spaced apart so that different regions of the SMA layer or layers 110, 111 may be activated so again the degree of bending and its location within the structure 106 may be controlled accordingly.

It should be appreciated that to achieve similar amounts of bending or shape change, the outermost SM layer 111 may be thinner than the inner SM layer 110 as the second moment of area is more strongly influenced by the depth to the neutral axis of the structure.

The deformed shape may be more complex by varying the thickness of the SM layer 110 or layers 111. For example, for a simple beam or panel structure 106 the thickness of the layer 110 is tapered between its end points, thus when activated the SM layer 110 produces a higher rate of bending where the SM layer 110 is thicker. As will be apparent, an intermediate member may be used which itself is inductively heated by the activated coil or coils; the heat from the intermediate member is then transferred by contact or radiation to the alloy 110.

Referring again to figure 2, the circular or strictly spiral coil 118 induces a similar shaped eddy current 119. Thus in the cross-section of Figure 1 the magnetic flux paths are schematically illustrated at 99, which induce the circulating eddy current 119. Depending on the thickness of the SM element 110 and strength of the magnetic field, a number of eddy currents may be generated. The dashed line 98 indicates a mirror of the cross-section and general current directions.

A contact type of arrangement is shown in Figure 3 where a structural member 120 has a portion surrounded by an electrical coil 122 and another portion or portions in contact with the shape memory material element 126. The generator or other source of electrical current 124 can be readily controlled to vary the heating between off and fully on. The alloy itself may be conductive and heated by resistance heating when current is supplied to the alloy but this arrangement requires direct electrical connections. However, a direct connection to the alloy can be avoided where the alloy is part of a structure and which is conductive. The frequency of electrical excitation can be chosen to localise the heating effect, generally speaking the higher the frequency the more localised the heating.

In another embodiment of the present invention shown in Figure 8 a structure 128, in this example a beam, comprises an insulating material (such as a ceramic, polymer or composite) and embedded SM wires 130. Such non-metallic and insulating structures may often require movement or stiffness change in a number of applications. The arrangement of the shape memory material wire alloy is selected to obtain a desired movement such as bending of the structure 128 in which the SM wires 130 are embedded. In this example the array comprises a number of looped coils 130 arranged in a line away from the neutral axis of the beam 128. The SM coils 130 are inductively heated by an array of electrical coils 130 located inside, or in this case, outside the structure 128.

In this particular embodiment, the loops of SMA material effectively form the secondary winding of an open transformer. As shown and according to the invention, the alloy wires 130 are arrayed in elongate loops that are arranged to form a resonant circuit with the excitation frequency matched to optimise transmission. When activated the coils 130 shorten (direction of arrow 132) thereby causing strain in the beam 128 and bending, in this example, downwardly into an arcuate shape (similar to Figure 6). The shape memory material inductive heating arrangement comprising the array of coils is capable of carrying an alternating electrical current and generating a magnetic field. Similar to the embodiment described with reference to Figures 1, 2 and 6, the shape memory elements 130 have a first state having a first stress-strain characteristic and a second state having a second stress-strain characteristic. The array of coils 118 and shape memory elements 130 are in effective range so that when an alternating current is passed through the coils 118 the shape memory elements 130 are subject to the magnetic field and heated thereby, the induced heat sufficient to change the modulus of the shape memory material between the first and the second state. In this case the invention lies in that the shape memory element 130 is in the form of a loop 130 and the magnetic field and electrical coils 118 are arranged to cause an electrical current to flow around the loops 130 in order to cause direct electrical resistance heating therein. Thus again and in accordance with the present invention discrete (eddy) currents are generated within the body of the SM element with no closed electrical circuit formed. In this way the present invention solves the aforesaid problems of the prior art.

Preferably the loops 130 are elongate with the longest dimension arranged to provide the bending force. Thus in the encastre beam (or plate) 128, the loops are elongate in the direction of arrow 132. The loops may be arranged either in the plane of the paper or perpendicular to the plane of the paper.

Although a single loop may be provided to give an amount of bending is it preferable that an array of loops 130 are provided. Furthermore, a plurality of arrays of elongate loops 130 is provided, typically in a plane perpendicular to the paper.

In another embodiment, the SM element consists of multiple interconnected loops that electrically form a multi-turn coil. The individual turns of the electrical conducting loops act together mechanically to provide a higher resultant change in force.

It should be appreciated that one or more loops may be in the form of a circle, square or other convenient form and complementary to the shape or configuration of the beam 128 or other flexural member.

Alternatively, and shown in Figure 8a, where a more complex bent shape is desired the loop(s) may be in the form of an ellipse, rectangle or other convenient non-symmetrical form capable of anisotropic changes in any one of the group of properties comprising movement or force in different directions. Thus when heated beyond its transition temperature, the amount of strain imparted on the host structure 128 by SM element 130 in the direction X-X is greater than Y-Y. Hence the beam or plate will bend more in the X-X direction than the Y-Y.

Figure 8b shows a loop 130 comprising portions of SM material 133 and at least one other part 134 having a second material consisting of a different SM material or non SM properties in order to produce an anisotropic change in properties. Thus when heated beyond the transition temperature of the material 133, the amount of strain imparted on the host structure 128 by SM element 130 in the direction X-X is greater than Y-Y. Hence the beam or plate will bend more in the X-X direction than the Y-Y.

Other arrangements may be made without departing from the scope of the present invention, for example, a plurality of arrays of elongate loops 130 are provided and each array or loop 130 is disposed in a different direction with respect to the structure 128 so that the structure is capable of complex shape change.

Furthermore, the loop may comprise an electrical conductor which does not have SMA properties, but is in intimate thermal contact with an SMA element, such that the SMA is heated indirectly from the conductor itself heated by the applied magnetic field.

It should be appreciated that the degree of bending of the structure 12 is capable of being controlled is similar manner as the embodiment described with reference to Figure 6. Various embodiments may be made without departing from the scope of the present invention, for example, each elongate coil 130 may be of different lengths, thicknesses, number of turns or materials to tailor the shape of the structure as well as elongate loops 130 being disposed in different directions within a plane and within different planes to produce a complex deformed shape. The loops could be of other electrically conducting material, without substantially departing from the scope of the present invention. In this case, SMA material would be in close proximity to the electrical loop. It should be apparent to the skilled person that several loop geometries may be used to provide different degrees of magnetic coupling by virtue of changes of magnetic field strength or frequency, such as achieved by changes in electrical current or frequency.

Referring now to Figure 9, a bypass exhaust nozzle 14 of a gas turbine engine 10 comprises deployable noise reduction tabs 20'. The present invention may equally be applied to a core nozzle.

The deployed tabs 20' are radially inwardly angled β into a bypass duct 30 (β is relative to a tangential line 24 of the nozzle wall 15 immediately upstream of the tabs 20') and, in operation, are immersed in the bypass exhaust flow exhausted through the nozzle 14. The profile of the core nozzle wall 15, immediately upstream of the tabs 20', itself is at an angle α (typically between 5° and 20°) to the engine axis 1. It should be noted that the tab may either pivot or bend into the gas flow.

When the tabs 20' are angled radially inwardly they induce stream-wise vortices in the exhaust flow through and around the nozzle 14. These vortices are generated and shed from the sides of the tabs 20 and increase the local turbulence levels in a shear layer that develops between the core and bypass exhaust streams and ambient air downstream of the exhaust nozzle assembly 16. This vorticity and turbulence increases the rate of mixing between the core and bypass exhaust streams or the bypass exhaust stream and ambient air. This additional mixing more quickly reduces the gas velocities downstream of the exhaust assembly, as compared to a conventional nozzle, and in particular reduces the mid to low frequency noise generated by the exhaust streams.

During aircraft cruise radially inwardly angled tabs 20' cause aerodynamic drag and it is therefore desirable to aerodynamically align the tabs 20.

In Figure 10 the deployable tab 20 comprises flexural element 64 and SM element 66 spaced apart and joined together by webs 102. The flexural element 64 and the SM element 66 are further joined together at the downstream edge 92 of the tab 20. An array of inductive heating coils 118 is disposed within the tab 20 in effective range of the SM element 66. It is preferable, although not essential to provide an insulating layer 140 to the outside of the SM element 66 to isolate the element 66 from fluid flow temperatures. The natural shape of the SM element 66 is arcuate, however, when integrated into the tab 20 the relatively low stiffness of the SM element 66 is overcome by the flexural element 64 and the tab assumes a less arcuate and aerodynamically unobtrusive or non-deployed position. This is where the SM material is relatively flexible due to its low elastic modulus. When it is desirable to deploy the tabs 20' for noise reduction, the inductive heating coils 118 are energised and the temperature of the SM element 66 increases above its modulus change temperature and its modulus significantly increases. When the modulus increases, the SM element material increases stiffness forcing the tab 20' into the SM element's natural arcuate shape bending the tabs 20' radially inwardly to immerse in the exhaust stream.

The flexural element 64 provides a returning force to the tab 20 after the tab 20 has been deployed, the inductive heating stopped and the SM element 64 has cooled below its modulus change temperature. The flexural element 64 helps to prevent hysteresis of the tab 20 and may itself comprise any suitable resilient material such as titanium.

With reference to Figures 9 and 10, it should be apparent that the noise reduction tabs or serrations are just one embodiment of the present invention, which may be equally applied to shape changes of airfoils such as blade and vanes. Furthermore, any shape of tab or serration may be used and deployment may be independent of one another.

The present invention is also applicable to other mechanisms. One such application includes the variable area nozzle as claimed and described in EP04252682.2 of the same Applicant and incorporated herein by reference. Briefly, the variable area exhaust nozzle assembly comprises the nozzle being formed to allow variation in its cross-sectional area dependent upon operational status. The nozzle is deformable from a first state to a second state of differing cross-sectional area, the nozzle being associated with deformation means to progressively shift deformation of the nozzle to alter presented nozzle cross-sectional area. The first state comprises a round circumference and the second state approximates a polygon, pursed flute, or sinusoidal variation in radius around the circumference characterised in that the nozzle comprises a shape memory material inductive heating arrangement as herein described. Thus to improve aero-engine operability and noise reduction a larger cross-sectional area nozzle is preferred at take-off to reduce the difference between jet velocity and ambient thereby reducing jet noise and a smaller cross-sectional area nozzle is preferred at cruise to give an increase in jet velocity. Jet noise is not particularly problematic at high altitudes.

Other applications comprise automotive aerodynamic components, heating / ventilation controls and civil structures.

It should be appreciated by one skilled in the art that all of the SM elements 66 described herein may be manufactured from any, or any combination of the following materials; Titanium, Manganese, Iron, Aluminium, Silicon, Nickel, Copper, Zinc, Silver, Cadmium, Indium, Tin, Lead, Thallium, Platinum, ceramic or polymers.

In particular and with reference to the embodiment of Figure 9, the SM element comprises approximately 50% titanium and 50% nickel by weight. However, it should be understood by the skilled reader that other compositions are desirable depending on desired transition temperatures and required modulus changes. Desirable properties of the SMA element are capable of being fine-tuned by changing their exact composition. The SM material has a 'cold temperature' elastic modulus of 30 kN/mm$^2$ and can accommodate recoverable plastic deformation like behaviour, and a 'hot temperature' elastic modulus of 85 kN/mm$^2$. The switch or modulus change temperature is within the range 80-100°C. However, the skilled artisan should be aware that for any given application it is possible to design a SM material and a suitable reference for such design is "Shape Memory Materials", Otsuka, K. and Wagman, C.M., Cambridge University Press.

In a further embodiment of the present invention and with reference to Figure 1, each member 108, 110 is substantially flat so that when the SM element 110 is inductively heated or cooled there is no shape change of the structure 106. However, the overall stiffness of the structure 106 does change, either becoming stiffer or more flexible. Figure 11 indicates how a change in stiffness from the state 150 to a second state 151 alters the natural frequency of the structure for a given response amplitude 152. This is particularly beneficial where the structure 106 is subject to a source of vibration at or around its natural frequency and a change in stiffness, via the change in modulus of the SM element, is sufficient to shift its natural frequency away from the excitation frequency to avoid damage.

**Claims**

1. A shape memory material inductive heating arrangement comprising an array of coils (118) capable of carrying an alternating electrical current and generating a magnetic field, a shape memory element (110, 64) having a first state having a first stress-strain characteristic and a second state having a second stress-strain characteristic, **characterised in that** the array of coils (118) and shape memory element (110, 64) are in effective range wherein the array of coils (118) are arranged so that when an alternating current is passed through the coils (118) eddy currents are generated in the shape memory element (110, 64) and heated thereby, the induced heat sufficient to change the modulus of the shape memory element (110, 64) between the first and the second state.

2. A shape memory material inductive heating arrangement as claimed in claim 1 wherein the SM material and structure can move repeatedly between the two states.

3. A shape memory material inductive heating arrangement as claimed in any one of claims 1-2 wherein the second state allows less strain in the material

4. A shape memory material inductive heating arrangement as claimed in any one of claims 1-3 wherein the shape memory element (110, 64) is integrated into a structure (106, 20, 128) and change of the state of the shape memory material between the first to the second state effects a shape change in the structure (108, 64, 128).

5. A shape memory material inductive heating arrangement as claimed in claim 4 wherein at least one further shape memory element (111) is integrated into the structure (106, 20) and change of the state of the at least one shape memory material (111) from the first to the second state effects at least one further shape change in the structure (108, 64).

6. A shape memory material inductive heating arrangement as claimed in claim 5 wherein the at least one further shape memory element (111) is in the form of a layer (111) of SM material at least partly laid over a first SM layer (110).

7. A shape memory material inductive heating arrangement as claimed in any one of claims 1-6 wherein the depth of penetration through the SM layer (110, 111) by the magnetic field generated is selected by varying the any one of the group comprising alternating frequency, power, voltage or current in the coils (118), thereby controlling the degree of shape change.

8. A shape memory material inductive heating arrangement as claimed in any one of claims 1-7 wherein more than one array of coils (118, 118') is provided and is arranged to inductively heat a discrete portion of the SM material to control the deformed shape.

9. A shape memory material inductive heating arrangement as claimed in any one of claims 1-8 wherein the heating effect is controlled to be within the transition band of the SMA material, thus providing a continuously variable movement or change of condition between the two extreme states.

10. A shape memory material inductive heating arrangement as claimed in any one of claims 1-9 wherein the thickness of the SM (110, 111, 64) varies to control the deformed shape.

11. A shape memory material inductive heating arrangement as claimed in any one of claims 1-9 wherein the coils (118) are arranged in any one of a group of general shapes comprising circular, square or triangular.

12. A shape memory material inductive heating arrangement as claimed in any one of claims 1-11 wherein the shape memory element (130) is in the form of a loop (130) and the magnetic field and electrical coils (118) are arranged to cause an electrical current to flow around the loop (130) in order to cause direct electrical resistance heating.

13. A shape memory material inductive heating arrangement as claimed in claim 12 wherein the loop (130) is elongate.

14. A shape memory material inductive heating arrangement as claimed in any one of claims 12-13 wherein an array of hoops (130) is provided.

15. A shape memory material inductive heating arrangement as claimed in claim 12 wherein a plurality of arrays of elongate loops (130) are provided.

16. A shape memory material inductive heating arrangement as claimed in any one of claims 12-15 wherein the SM element consists of multiple interconnected loops that electrically form a multi-turn coil.

17. A shape memory material inductive heating arrangement as claimed in any one of claims 15-16 wherein the individual turns of the electrical conducting loops act together mechanically to provide a higher resultant change in force.

18. A shape memory material inductive heating arrangement as claimed in any one of claims 12-17, wherein one or more loops may be in the form of a circle, square or other convenient form.

19. A shape memory material inductive heating arrangement as claimed in any one of claims 12-17 wherein the loop may be in the form of an ellipse, rectangle or other convenient non-symmetrical form capable of anisotropic changes in any one of the group of properties comprising movement or force in different directions.

20. A shape memory material inductive heating arrangement as claimed in any one of claims 12-17 wherein at least one part of the loop comprises a second material having a different or no SM properties in order to produce an anisotropic change in properties.

21. A shape memory material inductive heating arrangement as claimed in claim 12 wherein a plurality of arrays of elongate loops (130) are provided each array (130) or loop (130) is disposed in a different direction with respect to the structure (128) so that the structure is capable of complex shape change.

22. A shape memory material inductive heating arrangement as claimed in any one of claims 12-17 wherein the loop consists of an electrical conductor which does not have SMA properties, but is in intimate thermal contact with an SMA element, such that the SMA is heated indirectly by the applied magnetic field.

23. An exhaust nozzle assembly (14) for a gas turbine engine (10), the exhaust nozzle comprising deployable noise reducing tabs (20) having the shape memory material inductive heating arrangement as claimed in any one of claims 1-21.

24. An exhaust nozzle assembly (14) as claimed in claim 23 wherein the deployable tabs (20) comprise flexural element (64) and an SM element (66) spaced apart and joined together by webs (102), at least one array of inductive heating coils (118) is disposed within the tab (20) in effective range of the SM element (66).

25. An exhaust nozzle assembly (14) as claimed in claim 23 wherein the tabs (20) are capable of deployment between an aerodynamically aligned position and a deployed position (20') where the tabs (20') are immersed in an exhaust gas stream to provide attenuation of exhaust noise, deployment of the tabs is effected by supplying the alternating current to the array of coils (118).

26. An exhaust nozzle assembly for a gas turbine engine, the nozzle being formed to allow variation in its cross-sectional area dependent upon operational status, the nozzle wherein the nozzle is deformable from a first state to a second state of differing cross-sectional area, the nozzle being associated with deformation means to progressively shift deformation of the nozzle to alter presented nozzle cross-sectional area, wherein the first state comprises a round circumference and the second state approximates a polygon, pursed flute, or sinusoidal variation in radius around the circumference **characterised in that** the nozzle comprises a shape memory material inductive heating arrangement as claimed in any one of claims 1-25.

27. A shape memory material inductive heating arrangement as claimed in any one of claims 1-22 wherein the induced heat is sufficient to change the modulus of the shape memory material between the first and the second modulus and thereby alter the natural frequency of the structure.

28. A shape memory material inductive heating arrangement as claimed in any one of claims 1-22 and 27 wherein the shape memory material comprises any one of a group comprising Titanium, Manganese, Iron, Aluminium, Silicon, Nickel, Copper, Zinc, Silver, Cadmium, Indium, Tin, Lead, Thallium, Platinum, Hafnium, Palladium, ceramic or polymer.

29. A shape memory material inductive heating arrangement as claimed in any one of claims 1-22 and 27, 28 wherein an insulation material (140) is applied to the SM material (110, 64, 130).

30. A shape memory material inductive heating arrangement as claimed in claim 29 wherein an insulation material (140) is applied to the SM material (110, 64, 130), the insulation material capable of thermal insulation.

**Patentansprüche**

1. Induktive Heizvorrichtung für ein Formgedächtnismaterial mit einer Gruppe von Spulen (118), die in der Lage sind, einen elektrischen Wechselstrom zu führen und ein Magnetfeld zu erzeugen und mit einem Formgedächtniselement (110, 64), das einen ersten Zustand mit einem ersten Kraft-Verformungsverhalten und einen zweiten Zustand aufweist, der ein zweites Kraft-Verformungsverhalten aufweist, **dadurch gekennzeichnet, dass** die Gruppe von Spulen (118) und das Formgedächtniselement (110, 64) in einem wirksamen Bereich liegen, in dem die Gruppe von Spulen (118) derart angeordnet ist, dass dann, wenn ein Wechselstrom die Spulen (118) durchfließt, Wirbelströme in dem Formgedächtniselement (110, 64) erzeugt werden, die dieses erwärmen, wobei die induzierte Wärme ausreicht, um den Modul des Formgedächtniselementes (110, 64) zwischen dem ersten und dem zweiten Zustand zu verändern.

2. Induktive Heizvorrichtung für ein Formgedächtnismaterial nach Anspruch 1, bei welcher das Formgedächtnismaterial und der Aufbau sich wiederholt zwischen den beiden Zuständen verändern können.

3. Induktive Heizvorrichtung für ein Formgedächtnismaterial nach einem der Ansprüche 1 oder 2, bei welcher der zweite Zustand eine geringere Beanspruchung des Materials ermöglicht.

4. Induktive Heizvorrichtung für ein Formgedächtnismaterial nach einem der Ansprüche 1 bis 3, bei welcher das Formgedächtniselement (110, 64) in einem Aufbau (106, 20, 128) integriert ist und eine Änderung des Zustandes des Formgedächtnismaterials zwischen dem ersten und dem zweiten Zustand eine Formänderung in dem Aufbau (108, 64, 128) bewirkt.

5. Induktive Heizvorrichtung für ein Formgedächtnismaterial nach Anspruch 4, bei welcher wenigstens ein weiteres Formgedächtniselement (111) in den Aufbau (106, 20) integriert ist und eine Änderung des Zustandes des wenigstens einen Formgedächtnismaterials (111) von dem ersten in den zweiten Zustand wenigstens eine weitere Formänderung in dem Aufbau (108, 64) bewirkt.

6. Induktive Heizvorrichtung für ein Formgedächtnismaterial nach Anspruch 5, bei welcher das wenigstens eine weitere Formgedächtniselement (111) in Form einer Schicht (111) aus Formgedächtnismaterial ausgebildet und wenigstens teilweise über eine erste Formgedächtnisschicht (110) gefügt ist.

7. Induktive Heizvorrichtung für ein Formgedächtnismaterial nach einem der Ansprüche 1 bis 6, bei welcher die Tiefe des Eindringens durch die Formgedächtnisschicht (110, 111) durch das erzeugte Magnetfeld durch Veränderung einer der Gruppen gewählt wird, die die folgenden Maßnahmen umfassen: Wechselstromfrequenz, Leistung, Spannung oder Strom in den Spulen (118), wodurch das Ausmaß der Formänderung gesteuert wird.

8. Induktive Heizvorrichtung für ein Formgedächtnismaterial nach einem der Ansprüche 1 bis 7, bei welcher mehr als eine Gruppe von Spulen (118, 118') vorgesehen und so angeordnet ist, dass induktiv ein diskreter Abschnitt des Formgedächtnismaterials erhitzt wird, um die deformierte Form einzustellen.

9. Induktive Heizvorrichtung für ein Formgedächtnismaterial nach einem der Ansprüche 1 bis 8, bei welcher die Heizwirkung so gesteuert wird, dass sie in einem Übertragungsband des Formgedächtnismaterials liegt, wodurch eine kontinuierlich variable Bewegung oder Änderung der Bedingung zwischen den beiden extremen Zuständen erreicht wird.

10. Induktive Heizvorrichtung für ein Formgedächtnismaterial nach einem der Ansprüche 1 bis 9, bei welcher die Dicke des Formgedächtnismaterials (110, 111, 64) unterschiedlich ist, um die deformierte Form einzustellen.

11. Induktive Heizvorrichtung für ein Formgedächtnismaterial nach einem der Ansprüche 1 bis 9, bei welcher die Spulen (118) in einer Gruppe angeordnet sind, in der die Spulen allgemein eine kreisförmige, eine quadratische oder eine dreieckige Form aufweisen.

12. Induktive Heizvorrichtung für ein Formgedächtnismaterial nach einem der Ansprüche 1 bis 11, bei welcher das Formgedächtniselement (130) die Gestalt einer Schleife (130) hat und das magnetische Feld und die elektrischen Spulen (118) so angeordnet sind, dass ein elektrischer Strom veranlasst wird, um die Schleife (130) herum zu fließen, um dort eine elektrische Widerstandsheizung zu bewirken.

13. Induktive Heizvorrichtung für ein Formgedächtnismaterial nach Anspruch 12, bei welcher die Schleife (130) langgestreckt ausgebildet ist.

14. Induktive Heizvorrichtung für ein Formgedächtnismaterial nach einem der Ansprüche 12 oder 13, bei welcher eine Gruppe von Reifen (130) vorgesehen ist.

15. Induktive Heizvorrichtung für ein Formgedächtnismaterial nach Anspruch 12, bei welcher mehrere Gruppen von langgestreckten Schleifen (130) vorgesehen sind.

16. Induktive Heizvorrichtung für ein Formgedächtnismaterial nach einem der Ansprüche 12 bis 15, bei welcher das Formgedächtniselement aus mehreren miteinander verbundenen Schleifen besteht, die elektrisch eine Spule mit mehreren Windungen bilden.

17. Induktive Heizvorrichtung für ein Formgedächtnismaterial nach einem der Ansprüche 15 oder 16, bei welcher die einzelnen Windungen der elektrisch leitfähigen Schleifen mechanisch zusammenwirken, um eine höhere resultierende Kraftänderung zu erzeugen.

18. Induktive Heizvorrichtung für ein Formgedächtnismaterial nach einem der Ansprüche 12 bis 17, bei welcher eine oder mehrere Schleifen in Form eines Kreises, quadratisch oder in einer anderen geeigneten Form angeordnet sind.

19. induktive Heizvorrichtung für ein Formgedächtnismaterial nach einem der Ansprüche 12 bis 17, bei welcher die Schleife die Form einer Ellipse, eines Rechtecks oder einer anderen geeigneten nicht symmetrischen Form aufweist, die in der Lage ist, anisotrope Änderungen in irgendeiner Gruppe von Eigenschaften zu erzeugen, die eine Bewegung oder Kraft in unterschiedlichen Richtungen umfassen.

20. Induktive Heizvorrichtung für ein Formgedächtnismaterial nach einem der Ansprüche 12 bis 17, bei welcher wenigstens ein Teil der Schleifen aus einem zweiten Material besteht, das unterschiedliche Formgedächtniseigenschaften oder keine Formgedächtniseigenschaften besitzt, um eine anisotrope Änderung in den Eigenschaften zu erzeugen.

21. Induktive Heizvorrichtung für ein Formgedächtnismaterial nach Anspruch 12, bei welcher mehrere Gruppen langgestreckter Schleifen (130) in jedem Aufbau (130) vorgesehen sind oder die Schleife (130) in einer anderen Richtung gegenüber dem Aufbau (128) angeordnet ist, so dass der Aufbau in der Lage ist, eine komplexe Formänderung durchzuführen.

22. Induktive Heizvorrichtung für ein Formgedächtnismaterial nach einem der Ansprüche 12 bis 17, bei welcher die Schleife aus einem elektrischen Leiter besteht, der keine Formgedächtniseigenschaften besitzt, der aber in inniger thermischer Berührung mit einem Formgedächtniselement steht, so dass das Formgedächtniselement indirekt durch das angelegte Magnetfeld erhitzt wird.

23. Schubdüsenaufbau (14) für ein Gasturbinentriebwerk (10), wobei die Schubdüse entfaltbare Lärmunterdrückungslaschen (20) aufweist, die eine induktive Heizvorrichtung für einen Formgedächtniswiderstand aufweisen, wie diese in einem der Ansprüche 1 bis 21 beansprucht ist.

24. Schubdüsenaufbau (14) nach Anspruch 23, bei welchem die entfaltbaren Laschen (20) aus einem flexiblen Element (64) und einem Formgedächtniselement (66) bestehen, die im Abstand zueinander angeordnet und durch Stege (102) verbunden sind, wobei wenigstens ein Aufbau induktiver Heizspulen (118) innerhalb der Lasche (20) im wirksamen Bereich des Formgedächtniselementes (66) angeordnet ist.

25. Schubdüsenaufbau (14) nach Anspruch 23, bei welchem die Laschen (20) in der Lage sind, sich zwischen einer aerodynamisch ausgerichteten Position und einer abgelenkten Position (20') zu entfalten, in der die Laschen (20') in einen Abgasstrom eingetaucht sind, um den Abgaslärm zu vermindern, wobei die Entfaltung der Laschen durch Zuführung eines Wechselstroms in die Spulen des Aufbaus (118) bewirkt wird.

26. Schubdüsenaufbau für ein Gasturbinentriebwerk, bei welchem die Düse derart ausgebildet ist, dass ihre Querschnittsfläche in Abhängigkeit von dem Betriebsstatus veränderbar ist und die Düse aus einem ersten Zustand in einen zweiten Zustand unterschiedlicher Querschnittsfläche deformierbar ist und die Düse mit Deformationsmitteln versehen ist, um progressiv die Düse zu deformieren und die hierdurch präsentierte Querschnittsfläche der Düse zu ändern, wobei der erste Zustand einen runden Umfang umfasst und der zweite Zustand sich einem Polygon, einer fortgesetzten Auskehlung oder einer sinusförmigen Veränderung im Radius um den Umfang herum annähert,
**dadurch gekennzeichnet, dass** die Düse eine induktive Heizvorrichtung für ein Formgedächtnismaterial nach einem der Ansprüche 1 bis 25 umfasst.

27. Induktive Heizvorrichtung für ein Formgedächtnismaterial nach einem der Ansprüche 1 bis 22, bei welcher die induzierte Wärme ausreicht, um den Modul des Formgedächtnismaterials zwischen dem ersten und dem zweiten Zustand zu ändern und **dadurch** die Eigenfrequenz des Aufbaus zu ändern.

28. Induktive Heizvorrichtung für ein Formgedächtnismaterial nach einem der Ansprüche 1 bis 22 und 27, bei welcher das Formgedächtnismaterial eine der folgenden Gruppen umfasst, die Titan, Mangan, Eisen, Aluminium, Silizium, Nickel, Kupfer, Zink, Silber, Kadmium, Indium, Zinn, Blei, Thallium, Platin, Hafnium, Palladium, Keramik oder Polymere umfassen.

29. Induktive Heizvorrichtung für ein Formgedächtnismaterial nach einem der Ansprüche 1 bis 22 und 27, 28, bei welcher ein Isoliermaterial (140) auf das Formgedächtnismaterial (110, 64, 130) aufgelegt ist.

30. Induktive Heizvorrichtung für ein Formgedächtnismaterial nach Anspruch 29, bei welcher das Isoliermaterial (140) auf das Formgedächtnismaterial (110, 64, 130) aufgebracht ist, um eine thermische Isolation zu bewirken.

**Revendications**

1. Agencement de chauffage inductif en matériau à mémoire de forme comprenant une série de bobines (118) capables de porter un courant électrique alternatif et générant un champ magnétique, un élément à mémoire de forme (110, 64) présentant un premier état possédant une première caractéristique de contrainte-déformation et un second état possédant une seconde caractéristique de contrainte-déformation, **caractérisé en ce que** la série de bobines (118) et l'élément à mémoire de forme (110, 64) se situe dans une plage effective dans laquelle la série de bobines (118) est agencée de sorte que lorsqu'un courant alternatif passe à travers les bobines (118), des courants de Foucault sont générés dans l'élément à mémoire de forme (110, 64) et de ce fait chauffés, la chaleur induite étant suffisante pour faire passer le module de l'élément à mémoire de forme (110, 64) entre le premier et le second état.

2. Agencement de chauffage inductif en matériau à mémoire de forme selon la revendication 1 dans lequel le matériau à mémoire de forme et la structure peuvent se déplacer à plusieurs reprises entre les deux états.

3. Agencement de chauffage inductif en matériau à mémoire de forme selon l'une quelconque des revendications 1 à 2 dans lequel le second état autorise moins de déformation dans le matériau.

4. Agencement de chauffage inductif en matériau à mémoire de forme selon l'une quelconque des revendications 1 à 3 dans lequel l'élément à mémoire de forme (110, 64) est intégré à l'intérieur d'une structure (106, 20, 128) et le passage du matériau à mémoire de forme entre le premier et le second état réalise une modification de la forme dans la structure (108, 64, 128).

5. Agencement de chauffage inductif en matériau à mémoire de forme selon la revendication 4 dans lequel au moins un autre élément à mémoire de forme (111) est intégré à l'intérieur de la structure (106, 20) et un passage du au moins un matériau à mémoire de forme (111) du premier au second état réalise au moins une autre modification de forme dans la structure (108, 64).

6. Agencement de chauffage inductif en matériau à mémoire de forme selon la revendication 5 dans lequel le au moins un autre élément à mémoire de forme (111) se présente sous la forme d'une couche (111) de matériau à mémoire de forme au moins en partie déposée au-dessus d'une première couche de matériau à mémoire de forme (110).

7. Agencement de chauffage inductif en matériau à mémoire de forme selon l'une quelconque des revendications 1 à 6 dans lequel la profondeur de la pénétration à travers la couche de matériau à mémoire de forme (110, 111) par le champ magnétique généré est sélectionnée en modifiant l'un quelconque parmi le groupe comprenant la fréquence alternée, la puissance, la tension ou le courant dans les bobines (118), contrôlant de ce fait le degré de modification de la forme.

8. Agencement de chauffage inductif en matériau à mémoire de forme selon l'une quelconque des revendications 1 à 7 dans lequel plus d'une série de bobines (118, 118') est prévue et est agencée pour chauffer de manière inductive une partie discrète du matériau à mémoire de forme pour contrôler la forme déformée.

9. Agencement de chauffage inductif en matériau à mémoire de forme selon l'une quelconque des revendications 1 à 8 dans lequel l'effet chauffant est contrôlé pour se situer dans la bande de transition du matériau à mémoire de forme, fournissant ainsi un déplacement variable en continu ou un changement de condition entre les deux états extrêmes.

10. Agencement de chauffage inductif en matériau à mémoire de forme selon l'une quelconque des revendications 1 à 9 dans lequel l'épaisseur du matériau à mémoire de forme (110, 111, 64) varie pour contrôler la forme déformée.

11. Agencement de chauffage inductif en matériau à mémoire de forme selon l'une quelconque des revendications 1 à 9 dans lequel les bobines (118) sont agencées dans un quelconque parmi un groupe de formes générales comprenant une forme circulaire, carrée ou triangulaire.

12. Agencement de chauffage inductif en matériau à mémoire de forme selon l'une quelconque des revendications 1 à 11 dans lequel l'élément à mémoire de forme (130) se présente sous la forme d'une boucle (130) et le champ magnétique et les bobines électriques (118) sont agencés pour amener un courant électrique à circuler autour de la boucle (130) afin de provoquer un chauffage à résistance électrique directe.

13. Agencement de chauffage inductif en matériau à mémoire de forme selon la revendication 12 dans lequel la boucle (130) est allongée.

14. Agencement de chauffage inductif en matériau à mémoire de forme selon l'une quelconque des revendications 12 à 13 dans lequel une série de boucles (130) est prévue.

**15.** Agencement de chauffage inductif en matériau à mémoire de forme selon la revendication 12 dans lequel une pluralité de séries de boucles allongées (130) sont prévues.

**16.** Agencement de chauffage inductif en matériau à mémoire de forme selon l'une quelconque des revendications 12 à 15 dans lequel l'élément à mémoire de forme est constitué de multiples boucles interconnectées qui forment de manière électrique une bobine à spires multiples.

**17.** Agencement de chauffage inductif en matériau à mémoire de forme selon l'une quelconque des revendications 15 à 16 dans lequel les spires individuelles des boucles conductrices électriques agissent ensemble mécaniquement pour fournir un changement de force résultant plus important.

**18.** Agencement de chauffage inductif en matériau à mémoire de forme selon l'une quelconque des revendications 12 à 17, dans lequel une ou plusieurs boucles peuvent se présenter sous la forme d'un cercle, d'un carré ou d'une autre forme appropriée.

**19.** Agencement de chauffage inductif en matériau à mémoire de forme selon l'une quelconque des revendications 12 à 17 dans lequel la boucle peut se présenter sous la forme d'une ellipse, d'un rectangle ou d'une autre forme dissymétrique appropriée capable de changements anisotropes dans l'un quelconque parmi le groupe de propriétés comprenant le déplacement ou la force dans différentes directions.

**20.** Agencement de chauffage inductif en matériau à mémoire de forme selon l'une quelconque des revendications 12 à 17 dans lequel au moins une partie de la boucle comprend un second matériau présentant une propriété à mémoire de forme différente ou aucune propriété à mémoire de forme afin de produire une changement anisotrope des propriétés.

**21.** Agencement de chauffage inductif en matériau à mémoire de forme selon la revendication 12 dans lequel une pluralité de séries de boucles allongées (130) sont prévues, chaque série (130) ou boucle (130) est disposée dans une direction différente par rapport à la structure (128) de sorte que la structure peut subir un changement de forme complexe.

**22.** Agencement de chauffage inductif en matériau à mémoire de forme selon l'une quelconque des revendications 12 à 17 dans lequel la boucle est constituée d'un conducteur électrique qui ne présente pas de propriétés d'agencement à mémoire de forme, mais est en contact thermique intime avec un élément à mémoire de forme, de telle sorte que l'agencement en matériau à mémoire de forme est chauffé indirectement par le champ magnétique appliqué.

**23.** Ensemble de buse d'échappement (14) pour un moteur de turbine à gaz (10), la buse d'échappement comprenant des languettes déployables réductrices de bruit (20) présentant l'agencement de chauffage inductif en matériau à mémoire de forme selon l'une quelconque des revendications 1 à 21.

**24.** Ensemble de buse d'échappement (14) selon la revendication 23 dans lequel les languettes déployables (20) comprennent un élément de flexion (64) et un élément à mémoire de forme (66) espacés l'un de l'autre et reliés l'un à l'autre par des toiles (102), au moins une série de bobines de chauffage inductif (118) est disposée à l'intérieur de la languette (20) dans la plage effective de l'élément à mémoire de forme (66).

**25.** Ensemble de buse d'échappement (14) selon la revendication 23 dans lequel les languettes (20) sont capables de se déployer entre une position alignée de manière aérodynamique et une position déployée (20') dans laquelle les languettes (20') sont immergées dans un courant de gaz d'échappement pour atténuer le bruit d'échappement, le déploiement des languettes est effectué en amenant le courant alternatif à la série de bobines (118).

**26.** Ensemble de buse d'échappement pour un moteur de turbine à gaz, la buse étant formée pour permettre la variation de sa superficie de section en fonction du statut opérationnel, dans lequel la buse est déformable d'un premier état à un second état d'une superficie de section différente, la buse étant associée à des moyens de déformation pour décaler progressivement la déformation de la buse pour modifier la superficie de section présentée de la buse, dans lequel le premier état comprend une circonférence ronde et le second état est proche d'un polygone, d'une cannelure en fourreau, ou d'une variation sinusoïdale du rayon autour de la circonférence, **caractérisé en ce que** la buse comprend un agencement de chauffage inductif en matériau à mémoire de forme selon l'une quelconque des revendications 1 à 25.

**27.** Agencement de chauffage inductif en matériau à mémoire de forme selon l'une quelconque des revendications 1 à 22 dans lequel la chaleur induite est suffisante pour faire passer le module du matériau à mémoire de forme entre le premier et le second module et modifier de ce fait la fréquence naturelle de la structure.

**28.** Agencement de chauffage inductif en matériau à mémoire de forme selon l'une quelconque des revendications 1 à 22 et 27 dans lequel le matériau à mémoire de forme comprend l'un quelconque parmi un groupe comprenant le titane, le manganèse, le fer, l'aluminium, le silicium, le nickel, le cuivre, le zinc, l'argent, le cadmium, l'indium, l'étain, le plomb, le thallium, le platine, l'hafnium, le palladium, la céramique ou un polymère.

29. Agencement de chauffage inductif en matériau à mémoire de forme selon l'une quelconque des revendications 1 à 22 et 27, 28 dans lequel un matériau isolant (140) est appliqué sur le matériau à mémoire de forme (110, 64, 130).

30. Agencement de chauffage inductif en matériau à mémoire de forme selon la revendication 29 dans lequel un matériau isolant (140) est appliqué sur le matériau à mémoire de forme (110, 64, 130), le matériau isolant pouvant effectuer une isolation thermique.

# Fig.1.

106

108

98

119

110

118

99

99

A

114

116

115

# Fig.3.

# Fig.4.

# Fig.2.

106

110

113

118

114

116

115

119

98

114

116

115

# Fig.5.

# Fig.7.

# Fig.6.

# Fig.8.

# Fig.8a.

# Fig.8b.

## Fig.9.

## Fig.9a.

# Fig.10.

# Fig.11.

**EP 1 612 416 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2374121 A
- EP 1031444 A
- JP 59120791 A
- EP 04252682 A